# EUROPÄISCHE PATENTSCHRIFT

(11) **EP 2 265 521 B1**
(45) Veröffentlichungstag und Bekanntmachung des Hinweises auf die Patenterteilung: **05.09.2012**
(21) Anmeldenummer: 09719299.1
(22) Anmeldetag: 05.02.2009
(51) Int. Cl.: B65G 15/42

(54) **FÖRDERBAND FÜR EINE LANGSTRECKENFÖRDERANLAGE MIT SICH LÄNGS ERSTRECKENDEN SEITENWÄNDEN**
BELT CONVEYOR FOR LONG-DISTANCE CONVEYOR SYSTEM HAVING LONGITUDINALLY EXTENDING LATERAL WALLS
BANDE TRANSPORTEUSE POUR UNE INSTALLATION DE TRANSPORT EN LONGUEUR COMPORTANT DES PAROIS LATÉRALES S'ÉTENDANT EN LONGUEUR

(30) Priorität: 11.03.2008 DE 102008013571
(43) Veröffentlichungstag der Anmeldung: 29.12.2010
(73) Patentinhaber: ContiTech Transportbandsysteme GmbH, 30165 Hannover (DE)
(72) Erfinder: DEITERS, Rolf-Hartmut, 37589 Kalefeld (DE)
(74) Vertreter: Finger, Karsten
(86) Internationale Anmeldenummer: PCT/EP2009/051301
(87) Internationale Veröffentlichungsnummer: WO 2009/112312

(56) Entgegenhaltungen:
- EP-A- 1 524 211
- WO-A-2005/108247
- DE-A1- 3 414 285
- DE-U1- 9 306 865

## Beschreibung

Die Erfindung betrifft ein Förderband für eine Langstreckenförderanlage mit einem langgestreckten, aus elastomerem Werkstoff bestehenden Fördergurt, an dem in Längsrichtung hintereinander angeordnet Querbalken befestigt sind, die an ihren freien Enden drehbar gelagerte Rollen tragen, sowie mit zwei rechts- und linksseitig im Bereich der seitlichen Begrenzung des Fördergurtes angeordneten Seitenwänden.

Ein solches gattungsbildendes Förderband ist aus der EP 0 745 545 A2 bekannt, in der eine Förderanlage zum Transport von Gütern über lange Strecken mittels eines Förderbandes beschrieben wird. Dieses in sich geschlossene Förderband weist einen sich in Förderrichtung erstreckenden, aus elastomerem Werkstoff bestehenden Fördergurt sowie voneinander beabstandete Balken auf, die quer zur Förderrichtung auf dem Fördergurt befestigt sind. An den beiden freien Enden des jeweiligen Balkens ist je eine Rolle drehbar gelagert angeordnet, die auf längs geführten Tragseilen abrollen. Diese Tragseile sind in an sich bekannter Weise parallel zur Längserstreckung des Förderbandes ausgerichtet und werden von entsprechenden Tragwerken geführt und gehalten.

Neben den quer zur Förderrichtung des Förderbandes auf dem Fördergurt angeordneten Balken verfügt das Förderband über eine rechts- und eine linksseitige Seitenwand, die im Wesentlichen senkrecht auf der Tragseite des Fördergurtes befestigt sind. Dadurch weist das Förderband in der Praxis bis zu 6 Meter lange kastenförmige Transportbereiche auf, in denen das Fördergut, z.B. Schüttgut rutschsicher aufnehmbar ist.

Damit das Förderband trotz der vergleichsweise hohen Seitenwände an den beiden Endpunkten der Transportstrecke schadlos um dort befindliche Umlenktrommeln geführt werden kann, ist es bekannt, diese Seitenwände als sogenannte Wellkanten auszubilden. Dieser Begriff verdeutlicht, dass die Seitenwände nicht langgestreckt und plan, sondern in gewellter Form beziehungsweise in Schlangenlinienform auf dem Fördergurt befestigt sind. Dadurch ist für die mit der Umlenkung des Förderbandes einhergehende Seitenwandstreckung genug Seitenwandmaterial vorhanden, um ein Reißen derselben zu verhindern.

Dieser Aufbau des Förderbandes erlaubt zwar einerseits sehr vorteilhaft einen effektiven Transport von Materialien über vergleichsweise große Strecken, andererseits ist dieser aber auch mit einer Reihe von Nachteilen verbunden. So sind die Herstellkosten des komplettierten Förderbandes nicht gering, da der Fördergurt und die Wellkanten getrennt voneinander hergestellt werden müssen. Danach muss der Fuß der Wellkante abschnittsweise auf den Fördergurt geklebt werden, was bei den großen Längen von oft mehreren Kilometern ein hoher Aufwand ist. Zudem ist der Materialaufwand für die Wellkanten wegen deren Wellengeometrie vergleichsweise hoch. Dieser hohe Materialaufwand führt auch zu einem sehr hohen Gesamtgewicht des Förderbandes.

Aus der EP 1 524 211 A1 ist ein Förderband für eine Langstreckenförderanlage gemäß dem Oberbegriff des Anspruchs 1 bekannt, bei dem die Seitenwände unverwunden mit dem Fördergurt verbunden sind. Durch diese konstruktive Maßnahme kann zwar der Materialeinsatz beim Aufbau der Seitenwände gegenüber den bekannten Wellkanten deutlich reduziert werden, allerdings werden zur Befestigung der geraden Seitenwände, die zum Zwecke der besseren Umlenkung Einschnitte aufweisen, an ihrem basisgurtseitigen Ende separate sich in Förderrichtung erstreckende Befestigungsprofilteile notwendig. Die Seitenwände sind parallel zu ihrer Längserstreckung rechts- und linksseitig mit den Befestigungsprofilteilen über Schrauben verbunden. Die Befestigungsprofilteile selbst sind mit dem Fördergurt verklebt oder mittels Befestigungsschrauben mit ihm verbunden. Der Montageaufwand und die Herstellkosten des Förderbandes sind aufgrund der separaten Befestigungsprofilteile zur Befestigung der Seitenwände beträchtlich.

Aus der DE 34 14 285 A1 ist ein Fördergurt für einen Vakuumfilter bekannt, der seitlich je ein Kantenprofil aufweist, die in entsprechend geformte Ausnehmungen in den Randbereichen des Fördergurtes eingreifen. Vakuumfilterbänder dienen zum ausfiltrieren von Suspensionen. Sie bestehen im wesentlichen aus einem endlos umlaufenden Fördergurt mit seitlich angeordneten Kantenprofilen. Querbalken zur Bildung einzelner Trogabschnitte sind bei derartigen Förderbändern für Vakuumfilter nicht vorhanden.

Der Erfindung liegt die Aufgabe zugrunde, ein gattungsgemäßes Förderband für Langstreckenförderanlagen vorzustellen, durch das ein dichter Trog hergestellt wird, bei dem keine Verbindungsteile montiert werden müssen bzw. ausreißen können und bei dem die Möglichkeit der Montage bzw. des Ersetzens schadhafter Seitenwände direkt am Anwendungsort Baustelle besteht.

Die Aufgabe wird erfindungsgemäß dadurch gelöst, dass die Seitenwände an ihrem fördergurtseitigen Ende jeweils in ein Fußteil übergehen, welches seinerseits in der tragseitigen Gummideckplatte des Fördergurtes formschlüssig eingesetzt ist und dass die Seitenwände eine sich zur Spitze verjüngende Querschnittsgeometrie aufweisen.

Die Seitenwände werden über ihre entsprechenden Fußteile formschlüssig mit dem Fördergurt verbunden. Ein aufwendiges Ankleben der Seitenwände auf dem Fördergurt entfällt. Die verjüngende Querschnittsgeometrie unterstützt das sich Umlegen der Seitenwände während des Umlaufs über die Umlenktrommeln und verhindert so ein Ausreißen der Verbindungsteile.

In vorteilhafter Ausgestaltung der Erfindung sind Seitenwand und Fußteil als ein extrudiertes Strangprofil aus elastomerem Werkstoff, insbesondere Gummi, ausgebildet. Der Vorteil liegt darin, dass die Seitenwände in beliebiger Länge hergestellt und später auf die erforderlichen Längen abgeteilt werden können.

In weiterer vorteilhafter Ausgestaltung der Erfindung ist das Fußteil trapezartig ausgebildet und in eine in den seitlichen Längsbereichen des Fördergurtes in der tragseitigen Gummideckplatte des Fördergurtes eingebrachte, schwalbenschwanzförmige, längsverlaufende Nut eingesetzt.

Die Verbindung der Seitenwände mit dem Fördergurt erfolgt durch ein längsparalleles Abklappen des Fördergurtes in dem jeweiligen Seitenbereich, so dass sich die jeweilige, hergestellte, zum Grund erweiternde Nut aufklappt, so dass das entsprechend passende Fußteil der jeweiligen Seitenwand in die aufgeklappte Nut eingesetzt werden kann, wobei der Fördergurt danach wieder in die horizontale Lage zurückgeführt wird und dabei die Nutschrägen in der tragseitigen Deckplatte das trapezartige Fußteil formschlüssig umschließen. Diese Montage der Seitenwand kann einerseits maschinell und andererseits auch erst am Aufbauort der Förderanlage durchgeführt werden. Dieses erspart erhebliche Transportkosten, da Fördergurtwickel und Seitenwandwickel einzeln kleinere Gebinde darstellen und kostengünstiger transportiert werden können.

Die schwalbenschwanzförmige Nut wird erst nach dem Fertigvulkanisieren des Fördergurtes mit einem entsprechend konfigurierten Messer in die Deckplatte des Fördergurtes in Längsrichtung eingeschnitten. Der Nutausschnitt endet in seiner Tiefe in jedem Fall oberhalb der Festigkeitsträgerlage des Fördergurtes, die entweder ein Gewebezugträger oder eine Stahlseileinlage ist.

Die schwalbenschwanzförmige, formschlüssige Verbindung von Fußteil und Fördergurt verhindert ein Lösen der Verbindung an den beiden Endpunkten der Förderstrecke im Bereich der Umlenktrommeln. Das Förderband der Langstreckenförderanlage kann schadlos umgelenkt werden.

Damit die Seitenwände auch hohe Seitenkräfte durch das Transportgut aufnehmen können, ist nach einer anderen Ausgestaltung der Erfindung vorgesehen, dass in den vorzugsweise aus einem gummielastischen Material hergestellten Seitenwänden Verstärkungsfasern oder textile Gewebelagen eingebettet sind.

Wenn das Verhältnis des Durchmessers der Umlenktrommeln zu der Höhe der Seitenwände nicht so günstig ausfällt, d.h. die Umlenktrommeln weisen einen kleineren Durchmesser auf, besteht die Möglichkeit, in den Seitenwänden Schlitze auszubilden, die senkrecht zur Förderrichtung und zur Quererstreckung des Fördergurtes ausgerichtet sind.

In weiterer vorteilhafter Ausgestaltung der Erfindung erstrecken sich die Seitenwände vom jeweiligen Fußteil unter einem von der Senkrechten abweichenden Winkel geneigt nach außen. Durch die Neigung wird ein gezieltes Abkippen der Seitenwände beim Umlauf um die Umlenkrolle ermöglicht.

Zum Aufbau des mit den eingangs genannten Querbalken komplettierten Fördergurtes wird außerdem vorgeschlagen, dass die Seitenwände quer zu deren Längserstreckung ausgerichtete Durchführöffnungen zur Aufnahme der Querbalken aufweisen. Diese Durchführöffnungen und/oder die Öffnungen zur Aufnahme von Befestigungsschrauben sind dabei vorzugsweise aus den Seitenwänden herausgestanzt oder herausgebohrt.

Durch die erfindungsgemäße Ausbildung wird der Materialeinsatz beim Aufbau der Seitenwände gegenüber den bekannten Wellkanten und der Montageaufwand gegenüber den bekannten unverwundenen Seitenwänden deutlich reduziert.

Anhand der Zeichnung wird nachstehend ein Ausführungsbeispiel des erfindungsgemäßen Förderbandes näher beschrieben. Es zeigt:
- Fig. 1: einen Förderbandabschnitt zwischen zwei Querbalken,
- Fig. 2: einen Teilquerschnitt durch den Fördergurt unter Darstellung einer mit ihrem angeformten Fußteil eingesetzten Seitenwand.

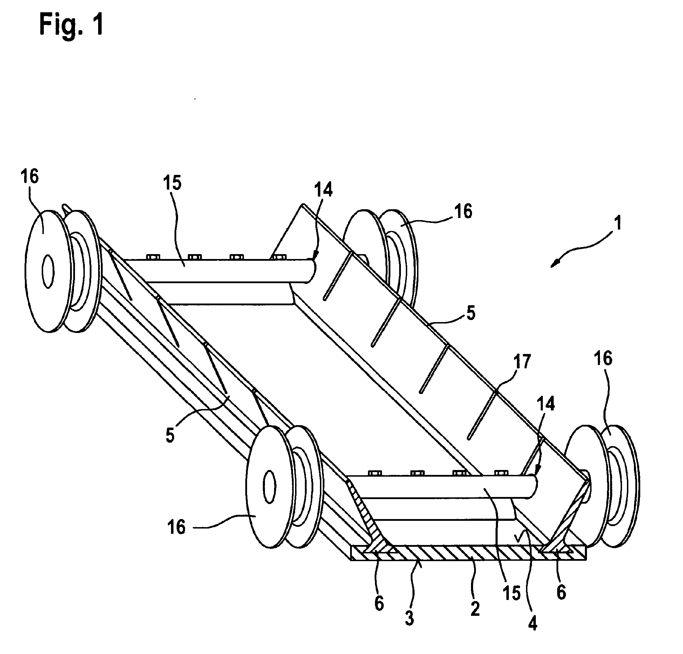

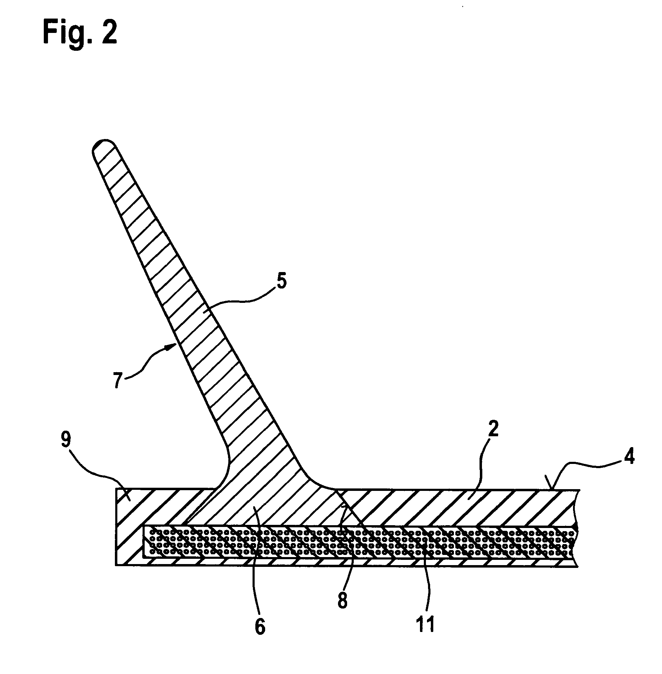

In Figur 1 wird ein Abschnitt eines Förderbandes 1 einer Langstreckenförderanlage gezeigt, bei dem das Förderband 1 aus einem langgestreckten, aus elastomerem Werkstoff bestehenden Fördergurt 2 mit einer Unterseite (Laufseite) 3 und einer das Fördergut tragenden Oberseite (Tragseite) 4 besteht. Im Bereich der rechtsseitigen und linksseitigen Begrenzung des Fördergurtes 2 sind auf dessen Tragseite 4 jeweils eine längs verlaufende Seitenwand 5 mit angeformtem Fußteil 6 in der Form eines extrudierten Strangprofils 7 angebracht. Die Fußteile 6 haben in dem hier gewählten Ausführungsbeispiel eine trapezförmige Querschnittsgeometrie (Fig.2). Der Boden des Fußteiles 6 ist breiter als der in der Ebene der Oberfläche 4 des Fördergurtes 2 liegende Halsbereich.

Die Fußteile 6 tragen jeweils die unter einem Winkel nach außen geneigte Seitenwand 5. Wie Fig. 2 verdeutlicht, haben die Seitenwände 5 ein sich zur Spitze verjüngendes Querschnittsprofil.

Die Seitenwände 5 sind mittels ihrer Fußteile 6 mit dem Fördergurt 2 dadurch verbunden, dass das trapezförmige Fußteil 6 in eine schwalbenschwanzförmige Nut 8 der tragseitigen Deckplatte 9 des Fördergurtes 2 eingesetzt ist. Die schwalbenschwanzförmige Nut 8 wird erst nach dem Fertigvulkanisieren des Fördergurtes 2 mit je einem Messer in die Deckplatte 9 des Fördergurtes 2 in Längsrichtung ausgeschnitten. Der Nutausschnitt endet in seiner Tiefe in jedem Fall oberhalb der Festigkeitsträgerlage 11 des Fördergurtes 2, die entweder ein Gewebezugträger oder eine Stahlseileinlage ist.

Der Fördergurt 2 wird am Montageort in üblicher Weise endlos geschlossen. Auch die Enden der Strangprofile 7 werden entweder mechanisch miteinander verbunden oder zusammenvulkanisiert.

Es kann vorteilhaft sein, zumindest die Seitenwände 5, sinnvollerweise aber auch die Fußteile 6 hinsichtlich ihres inneren Aufbaus mit Gewebelagen auszustatten, so dass die Seitenwände 5 sehr gut geeignet sind, um die von einem auf dem Fördergurt 2 befindlichen Fördergut ausgeübten Seitenkräfte abzufangen und in den Fördergurt 2 einzuleiten.

In den Seitenwänden 5 sind Durchführöffnungen 14 eingebracht, durch die so genannte Querbalken 15 geführt sind. Diese auf der Tragseite 4 angeordneten Querbalken 15 sind mit dem Fördergurt 2 fest verbunden, so dass eine von dem zu fördernden Material auf den Fördergurt 2 wirkende Gewichtskraft in die jeweiligen Querbalken 15 eingeleitet werden kann. Zur Weiterleitung dieser Traglast sind an den beiden freien Enden eines jeden Querbalkens 15 Rollen 16 drehbar gelagert, die auf hier nicht dargestellten Tragseilen abrollen. Diese Tragseile sind in an sich bekannter Weise parallel zur Längserstreckung des Förderbandes 1 ausgerichtet und werden von entsprechenden Tragwerken geführt und gehalten.

Wie Fig. 1 veranschaulicht, können in den Seitenwänden 5 Schlitze 17 ausgebildet sein, die im Wesentlichen senkrecht zur Oberfläche des Fördergurtes 2 ausgerichtet sind. Diese Schlitze 17 erleichtern insbesondere bei kleinerem Durchmesser einer Umlenktrommel die schadlose Umlenkung der Seitenwände 5 an den beiden Enden der Förderstrecke, da diese Schlitze 17 ein Aufweiten der von der Oberseite des Fördergurtes 2 wegweisenden Oberseite der Seitenwände 5 ermöglichen.

Wird die Seitenwand 5 des Strangprofils 7 vom Fußteil 6 unter einem Winkel abstehend ausgebildet, so kann auf die Schlitze 17 verzichtet werden, da bei einem Umlauf um eine Umlenktrommel die Seitenwände 5 sich nach außen verlegen können und so eine Kompensation der unterschiedlichen Strecken möglich ist.

### Bezugszeichenliste

- 1: Förderbandabschnitt, Förderband
- 2: Fördergurt
- 3: Laufseite
- 4: Tragseite
- 5: Seitenwand
- 6: Fußteil, trapezartig
- 7: Strangprofil
- 8: Nut, schwalbenschwanzförmig
- 9: Tragseitige Deckplatte
- 11: Festigkeitsträgerlage
- 14: Durchführöffnung
- 15: Querbalken
- 16: Rollen
- 17: Schlitze

## Patentansprüche

1. Förderband (1) für eine Langstreckenförderanlage, mit einem langgestreckten, aus elastomerem Werkstoff, insbesondere Gummi, bestehenden Fördergurt (2), an dem in Längsrichtung hintereinander angeordnet Querbalken (15) befestigt sind, die an ihren freien Enden drehbar gelagerte Rollen (3) tragen, sowie mit zwei rechts- und linksseitig im Bereich der seitlichen Begrenzung des Fördergurtes (2) angeordneten Seitenwänden (5),
**dadurch gekennzeichnet,**
**dass** die Seitenwände (5) an ihrem fördergurtseitigen Ende jeweils in ein Fußteil (6) übergehen, welches seinerseits in der tragseitigen Gummideckplatte (9) des Fördergurtes (2) formschlüssig eingesetzt ist, und dass die Seitenwände (5) eine sich zur Spitze verjüngende Querschnittsgeometrie aufweisen.

2. Förderband nach Anspruch 1, **dadurch gekennzeichnet, dass** Seitenwand (5) und Fußteil (6) als ein extrudiertes Strangprofil (7) aus elastomerem Werkstoff, insbesondere Gummi, ausgebildet sind.

3. Förderband nach Anspruch 1 und/oder 2, **dadurch gekennzeichnet, dass** das Fußteil (6) trapezartig ausgebildet ist, das in eine in den seitlichen Längsbereichen des Fördergurtes (2) in der tragseitigen Gummideckplatte (9) des Fördergurtes (2) eingebrachte schwalbenschwanzförmige, längsverlaufende Nut (8) eingesetzt ist.

4. Förderband nach Anspruch 2, **dadurch gekennzeichnet, dass** die Seitenwände (5) aus einem gummielastischen Material bestehen und eingebettete Verstärkungsfasern oder textile Gewebelagen aufweisen.

5. Förderband nach Anspruch 1 und 2, **dadurch gekennzeichnet, dass** in den Seitenwänden (5) Schlitze (17) ausgebildet sind, die senkrecht zur Förderrichtung und zur Quererstreckung des Fördergurtes (2) ausgebildet sind.

6. Förderband nach wenigstens einem der vorherigen Ansprüche, **dadurch gekennzeichnet, dass** die Seitenwände (5) sich von ihrem jeweiligen Fußteil (6) sich unter einem von der Senkrechten abweichenden Winkel nach außen geneigt erstrecken.

7. Förderband nach wenigstens einen der vorherigen Ansprüche, **dadurch gekennzeichnet, dass** die Seitenwände (5) quer zu deren Längserstreckung ausgerichtete Durchführöffnungen (14) zur Aufnahme der Querbalken (15) aufweisen.

## Claims

1. Belt conveyor (1) for a long-distance conveyor system, having an extended conveyor belt (2), consisting of elastomeric material, in particular rubber, attached to which are cross-bars (15), which are arranged one behind the other in the longitudinal direction and bear at their free ends rotatably mounted rollers (3), and having two side walls (5) arranged to the right and left sides in the region of the lateral delimitation of the conveyor belt (2), **characterized in that** the side walls (5) respectively go over at their end on the conveyor belt side into a foot part (6), which for its part is fitted with positive engagement in the rubber cover plate (9) on the carrying side of the conveyor belt (2), and **in that** the side walls (5) have a cross-sectional geometry tapering towards the tip.

2. Belt conveyor according to Claim 1, **characterized in that** the side wall (5) and the foot part (6) are formed as an extruded strand profile (7) of elastomeric material, in particular rubber.

3. Belt conveyor according to Claim 1 and/or 2, **characterized in that** the foot part (6) is of a trapezoidal form, which is fitted in a dovetail-shaped, longitudinally running groove (8) made in the lateral longitudinal regions of the conveyor belt (2), in the rubber cover plate (9) on the carrying side of the conveyor belt (2).

4. Belt conveyor according to Claim 2, **characterized in that** the side walls (5) consist of a rubberelastic material and have embedded reinforcing fibres or layers of textile fabric.

5. Belt conveyor according to Claims 1 and 2, **characterized in that** slits (17) are formed in the side walls (5), perpendicularly to the conveying direction and to the transverse extent of the conveyor belt (2).

6. Belt conveyor according to at least one of the preceding claims, **characterized in that** the side walls (5) extend from their respective foot part (6) outwardly inclined at an angle deviating from the perpendicular.

7. Belt conveyor according to at least one of the preceding claims, **characterized in that** the side walls (5) have, aligned transversely to the longitudinal extent thereof, through-openings (14) for receiving the cross-bars (15).

## Revendications

1. Bande transporteuse (1) pour installation de transport allongée, la bande transporteuse présentant
une courroie de transport (2) allongée constituée d'un matériau élastomère et en particulier de caoutchouc et sur laquelle sont fixées des poutres transversales (15) disposées les unes derrière les autres dans le sens de la longueur et portant à leurs extrémités libres des galets (3) montés à rotation et
deux parois latérales (5) situées respectivement à droite et à gauche au niveau de la frontière latérale de la courroie de transport (2),
**caractérisée en ce que**
les parois latérales (5) se prolongent à leur extrémité située du côté de la courroie de transport en une pièce de pied (6) qui elle-même est insérée en correspondance géométrique dans la plaque (9) de recouvrement en caoutchouc située du côté porteur de la courroie de transport (2) et
**en ce que** les parois latérales (5) présentent une section transversale dont la géométrie se rétrécit en pointe.

2. Bande transporteuse selon la revendication 1, **caractérisée en ce que** la paroi latérale (5) et la pièce de pied (6) sont configurées comme profilés extrudés (7) en matériau élastomère, en particulier en caoutchouc.

3. Bande transporteuse selon les revendications 1 et/ou 2, **caractérisée en ce que** la pièce de pied (6) est configurée en trapèze qui est inséré dans une rainure longitudinale (8) en forme de queue d'aronde ménagée dans les parties longitudinales latérales de la courroie de transport (2), dans la plaque (9) de recouvrement en caoutchouc située côté porteur de la courroie de transport (2).

4. Bande transporteuse selon la revendication 2, **caractérisée en ce que** les parois latérales (5) sont constituées de matériau élastique de type caoutchouc dans lequel sont incorporées des fibres de renfort ou des couches de tissu textile.

5. Bande transporteuse selon les revendications 1 et 2, **caractérisée en ce que** des fentes (17) perpendiculaires à la direction du transport et à l'extension transversale de la courroie de transport (2) sont formées dans les parois latérales (5).

6. Brande transporteuse selon au moins l'une des revendications précédentes, **caractérisée en ce que** les parois latérales (5) s'étendent obliquement vers l'extérieur depuis leur pièce de pied (6) en formant un angle différent de la perpendiculaire.

7. Brande transporteuse selon au moins l'une des revendications précédentes, **caractérisée en ce que** pour la reprise des poutres transversales (15), les parois latérales (5) présentent des perforations (14) orientées transversalement par rapport au sens de leur longueur.
